Europäisches Patentamt

(19) European Patent Office

Office européen des brevets

(11) Veröffentlichungsnummer: **0 031 008**
**B1**

(12) **EUROPÄISCHE PATENTSCHRIFT**

(45) Veröffentlichungstag der Patentschrift:
22.02.84

(51) Int. Cl.³: **B 61 F 5/52**

(21) Anmeldenummer: 80106466.8

(22) Anmeldetag: 23.10.80

(54) **Drehgestell für Schienenfahrzeuge.**

(30) Priorität: 22.12.79 DE 2952182

(43) Veröffentlichungstag der Anmeldung:
01.07.81 Patentblatt 81/26

(45) Bekanntmachung des Hinweises auf die Patenterteilung:
22.02.84 Patentblatt 84/8

(84) Benannte Vertragsstaaten:
FR GB IT

(56) Entgegenhaltungen:
EP - A - 0 005 916
AU - A - 456 070
BE - A - 389 879
DE - A - 1 605 141
DE - A - 2 051 272
DE - A - 2 064 550
DE - A - 2 127 846
DE - B - 1 139 703
DE - B - 1 164 757
DE - B - 1 281 477
DE - B - 2 614 166
FR - A - 2 244 656
FR - A - 2 435 660
GB - A - 826 887
GB - A - 2 018 697

(73) Patentinhaber: Messerschmitt-Bölkow-Blohm
Gesellschaft mit beschränkter Haftung,
Postfach 801109, D-8000 München 80 (DE)

(72) Erfinder: Weiland, Emil, Dipl.-Ing., Weidenstrasse 22,
D-8011 Hohenbrunn (DE)
Erfinder: Günther, Christian, Dr. Dipl.-Ing.,
Ludwig-Thoma-Strasse 71, D-8013 Haar (DE)

(56) Entgegenhaltungen: (Fortsetzung)
ZEITSCHRIFT FÜR EISENBAHNWESEN UND
VERKEHRSTECHNIK, vol. 98, Nr. 5, Mai 1974 G. STAVE
"Der Verwindungsweiche Drehgestellrahmen für
Schienenfahrzeuge", Seiten 141-143, 151

## Drehgestell für ein Schienenfahrzeug

Die Erfindung bezieht sich auf ein Drehgestell für ein Schienenfahrzeug nach dem Oberbegriff des Patentanspruchs 1.

Bei den bekannten Drehgestellen dieser Art (DE-A-1 605 141) ist der H-förmige Rahmen eine zumeist verschweißte Stahlkonstruktion mit biegesteifen Armen und einem Querträgerabschnitt, der zumindest hinsichtlich der angreifenden Biegebeanspruchungen ebenfalls starr ausgebildet ist, aus Gründen eines gelenkfreien Ausgleichs von Höhenunterschieden aber verdrehweich gestaltet sein kann, und als Primärfederung sind gesonderte, zwischen dem Drehgestellrahmen und den Radsätzen wirksame Federelemente vorgesehen. Derartige Drehgestelle erfordern einen hohen Fertigungs- und Gewichtsaufwand.

Aufgabe der Erfindung ist es, ein Drehgestell der im Oberbegriff des Patentanspruchs 1 genannten Art so auszubilden, daß der Bauaufwand für die Primärfederung und das Gesamtgewicht des Drehgestells auf ein Minimum reduziert werden.

Diese Aufgabe wird erfindungsgemäß durch das im Patentanspruch 1 gekennzeichnete Drehgestell gelöst.

Aufgrund der beanspruchten Gestaltung des Drehgestellrahmens aus Faserverbundwerkstoff mit einer sich längs des Rahmens ändernden, am Querträgerabschnitt relativ biegesteifen, im Bereich der Arme des Drehgestellrahmens aber elastischen Materialcharakteristik und der dadurch erreichten Einbeziehung der Primärfederung in den Drehgestellrahmen selbst werden bei dem erfindungsgemäßen Drehgestell in äußerst gewichts- und herstellungsgünstiger Bauweise sowohl die Aufgaben der Radsatzpositionierung als auch der Radsatzprimärfederung von dem Drehgestellrahmen übernommen, wobei die Radsätze über die Achsaufhängung direkt mit dem Drehgestellrahmen verbunden sind, so daß neben der sonst gebräuchlichen Primärfederung auch eine längselastische Achsanlenkung entfällt. Außerdem werden die Aufstandskraftvariationen verringert, was zu einer geringeren Beanspruchung des Oberbaues von schnellfahrenden Schienenfahrzeugen führt.

In weiterer vorteilhafter Ausgestaltung der Erfindung nimmt die Querschnittsfläche der Arme gemäß Anspruch 2 von ihren Enden zum Querträgerabschnitt hin zu, wodurch sich ein für die Primärfederung günstiges Elastizitätsverhalten des Drehgestellrahmens erzielen läßt. Bei einer speziellen Ausführungsform des Drehgestells sind gemäß Anspruch 3 die Arme des Drehgestellrahmens vorzugsweise zu ihren Enden hin vom Fahrzeugrahmen weg nach unten gebogen, wodurch eine passive durch Fliehkräfte erzeugte Radialeinstellung der Radsätze in Kurven und damit eine verbesserte Radführung erreicht wird. Aus dem gleichen Grund sind gemäß Anspruch 4 die Radachsen vorzugsweise auf der der Schiene zugewandten Seite der Arme des Drehgestellrahmens angeordnet, was sich besonders bei einem Drehgestellrahmen empfiehlt, dessen Arme nicht nach unten gebogen, sondern geradlinig horizontal verlaufend ausgebildet sind.

Zwischen den Radachsen und dem Fahrzeugrahmen sind gemäß Anspruch 5 zweckmäßigerweise Vorlastelemente angeordnet, die über eine Steuerung einstellbar sind. Die Vorlastelemente weisen eine Druckkoppelung auf jeder Drehgestellseite auf, um durch Drehgestell-Nickbewegungen bedingte Störungen nicht auf den Fahrzeugrahmen zu übertragen. Der Regler erhält als Eingangssignale übermäßige Fahrzeugrahmen-Querbeschleunigungen, daraus resultierende aerodynamische Kräfte und Momente am Fahrzeugrahmen, sowie die Zuladung und berechnet daraus die zur Kraft- und Momentenreaktion notwendigen Drücke in den Vorlastelementen, so daß der Mittelwert der Fahrzeugrahmenlage bezüglich des Drehgestells erhalten bleibt, d. h. eine aktive Stabilisierung erreicht wird. Eine zusätzliche Rückführung der Fahrzeugrahmenlage relativ zum Drehgestell erlaubt deren Anpassung an Lage-Sollwerte, die durch die zulässigen Werte der Fahrzeugrahmen-Querbeschleunigung bei Kurvenfahrt definiert sind. Der Fahrzeugrahmen wird also um seine Längsachse durch die Vorlastelemente mit Wegrückführung gedreht, so daß die vom Passagier wahrnehmbare freie Querbeschleunigung unter einen vorgegebenen Wert abgesenkt wird, d. h. es ergibt sich ein Neigungsausgleich. Ein Nickausgleich ist bei mittiger Lage der Luftfeder nicht notwendig, hierzu müßten die Radaufstandskräfte vollständig in den Rahmen eingeleitet werden. Anstelle von oder in Verbindung mit Luftfedern können auch kraftgesteuerte, hydraulische Vorlastelemente verwendet werden.

Die geringfügige Relativverdrehung der Achshalterungen, die bei der durch den Drehgestellrahmen bewirkten, passiven Radialeinstellung in Kurven auftritt, wird gemäß Anspruch 6 vorzugsweise durch Elastomerelemente ermöglicht, durch die sich gleichzeitig die Dämpfungscharakteristik der im Drehgestellrahmen integrierten Primärfederung verbessern läßt. Sollte diese durch den Drehgestellrahmen und die Gummi-Torsionselemente erzielte Eigendämpfung nicht ausreichen, können zusätzliche Dämpfungselemente eingebaut werden.

Anhand der Zeichnungen wird die Erfindung beispielsweise näher erläutert. Es zeigt

Fig. 1 schematisch in einer Seitenansicht eine erste Ausführungsform eines Drehgestells;

Fig. 2 eine Draufsicht auf das Drehgestell von Fig. 3;

Fig. 3 schematisch in der Seitenansicht eine zweite Ausführungsform des Drehgestells;

Fig. 4 schematisch in der Seitenansicht eine dritte Ausführungsform eines Drehgestells; und

Fig. 5 eine Draufsicht auf das Drehgestell von Fig. 4.

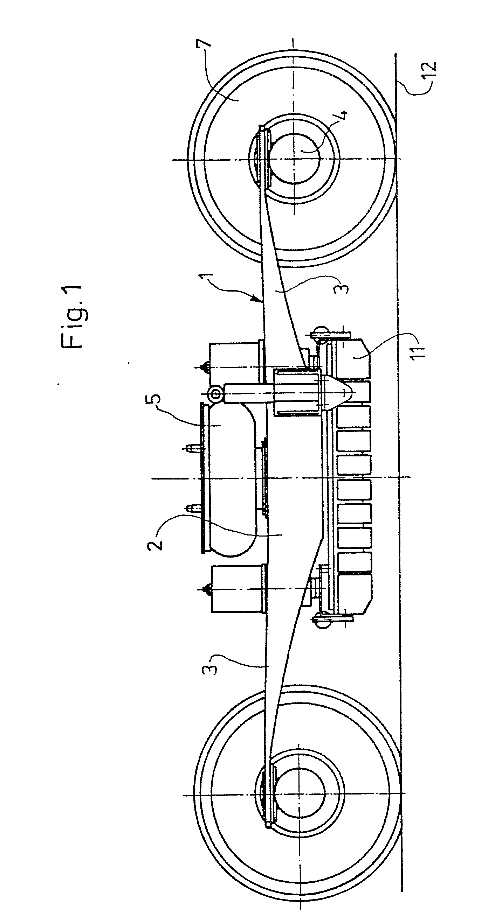

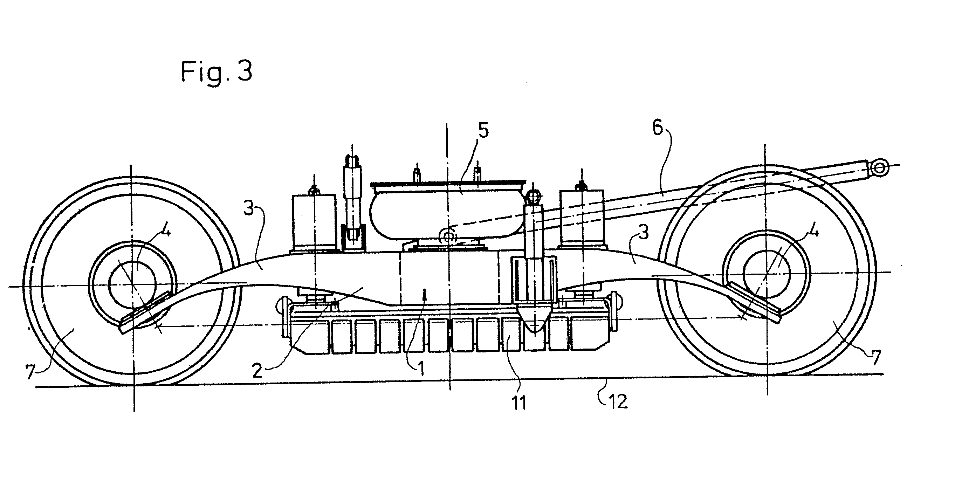

Die in Fig. 1 und 3 gezeigte Ausführungsform eines erfindungsgemäßen Drehgestells hat zwei Radachsen 4, auf denen die Räder 7 sitzen, die auf Schienen 12 laufen. Jede der Achsen 4 enthält eine Schlupfkupplung 8.

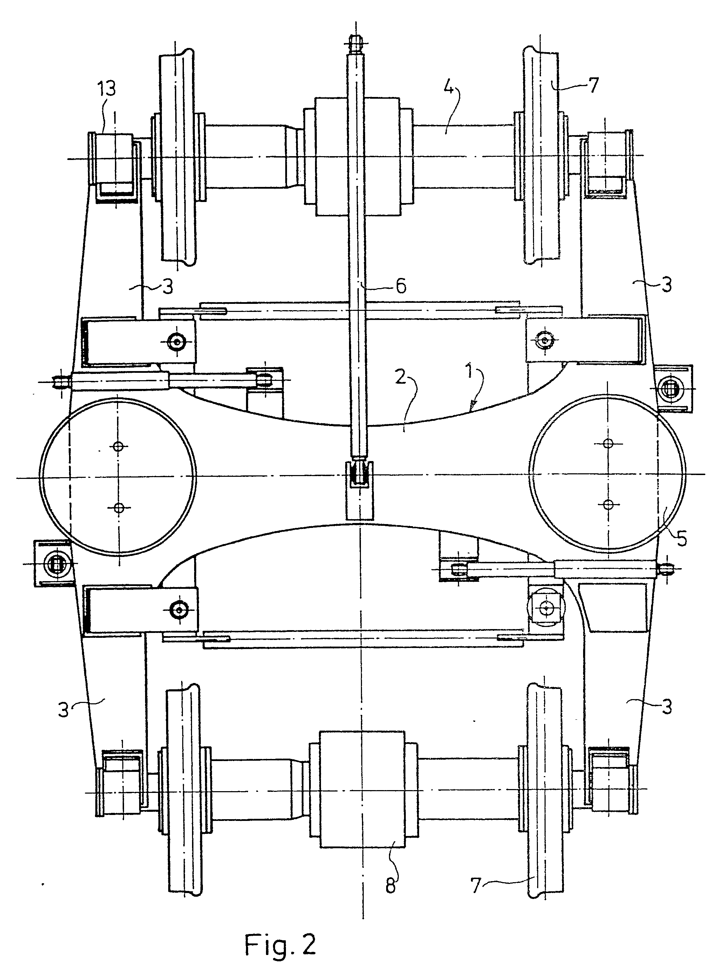

Als Drehgestellrahmen ist ein H-förmiges Teil 1 aus faserverstärktem Werkstoff vorgesehen, dessen Querträgerabschnitt 2 relativ starr ausgebildet ist und dessen Arme 3 sich vom Querträgerabschnitt 2 aus zu den Radsatzaufhängungen verjüngen. Das H-förmige Teil übernimmt die Aufgabe der Primärfederung. Die Übertragung der Beschleunigungs- und Bremskräfte zwischen dem H-förmigen Teil 1 und dem in Fig. 1 und 2 nicht gezeigten Fahrzeugrahmen übernimmt ein mittig am Querträgerabschnitt 2 angeordneter Lenker 6 (Fig. 2). Die Abbremsung jeder Achse 4 erfolgt durch nicht gezeigte Scheibenradbremsen. Als Zusatzbremse ist eine Magnetschienenbremse 11 vorgesehen. Die Sekundärfederung besteht aus zwei querstabilen Luftfederbälgen 5 mit parallel angeordneten hydraulischen Stoßdämpfern, die zwischen dem Fahrzeugrahmen und dem H-förmigen Teil 1 auf dem Querträgerabschnitt 2 im Bereich der Einleitung der Arme 3 angeordnet sind. Die Luftfederbeläge 5 übernehmen die Stabilisierung und Abstützung des Fahrzeugrahmens. Innerhalb der Luftfedern können Notfedern in Form geschichteter Hohlblockfedern angeordnet sein.

Während bei der in den Fig. 1 gezeigten Ausführungsform die Arme 3 die Radachsen 4 auf deren Oberseite aufhängen, sind die Arme 3 bei der Ausführungsform nach Fig. 2 und 3 nach unten in Richtung der Schienen 12 gebogen, so daß die jeweilige Radaufhängung die Achse 4 untergreift. Dadurch ergibt sich eine passive Radialeinstellung der Radsätze in Kurven und somit eine verbesserte Führung. Zum Ausgleich der dabei auftretenden Verdrehung der Achsaufhängungen können, wie in Fig. 2 gezeigt ist, Gummitorsionselemente 13 vorgesehen werden.

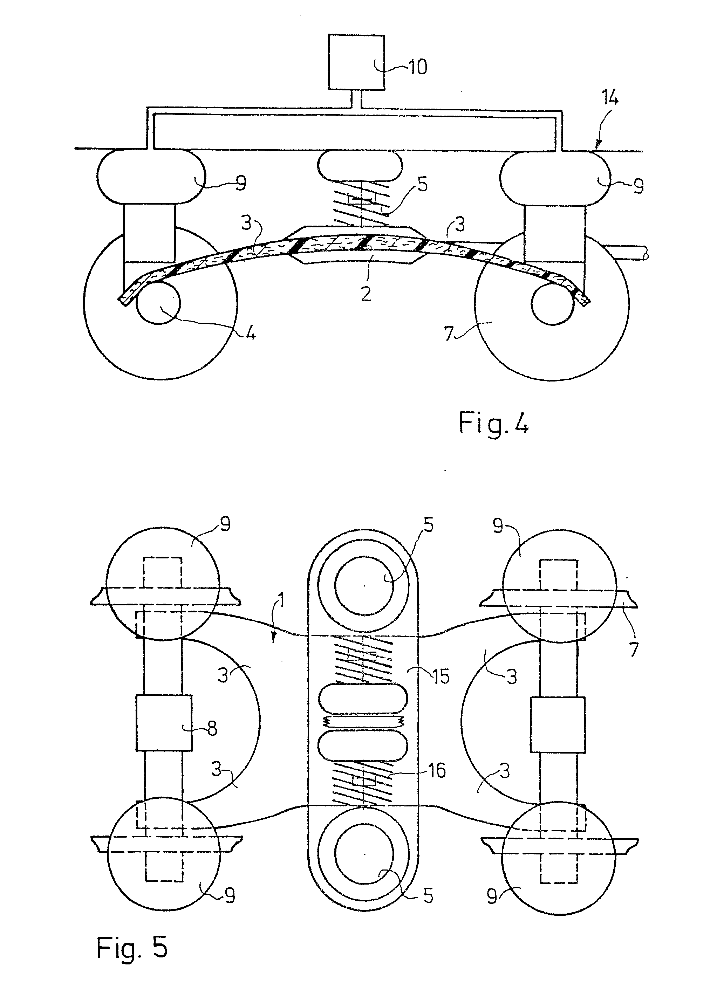

Die in den Fig. 4 und 5 gezeigte Ausführungsform unterscheidet sich von der in den Fig. 1 und 2 gezeigten lediglich dadurch, daß zwischen dem Fahrzeugrahmen 14 und den Radachsen 4 jedem Rad 7 zugeordnet Vorlastelemente 9 vorgesehen sind, die von einem Vorlast- und Kraftausgleichsregler 10 gesteuert werden. Der Querträgerabschnitt des H-förmigen Teils 1 ist bei dieser Ausführungsform mit einer Leichtmetallbrücke 15 versehen, die die Sekundärfederung 5 und eine Querfederung 16 trägt.

Erfindungsgemäß werden somit der Rahmen und die Primärfederung eines Drehgestells für Schienenfahrzeuge durch ein H-förmiges Teil aus faserverstärktem Werkstoff ersetzt, das sowohl die Aufgaben der Radsatzpositionierung als auch der Radsatzprimärfederung übernimmt. Die Sekundärfederung kann durch direkt über den Radsatzlagern liegende regelbare Vorlastelemente ergänzt werden.

Durch die bei diesem Drehgestell vermiedene Kraftumlenkung und durch die Verwendung des H-förmigen Teils aus faserverstärktem Werkstoff, die die Doppelfunktion der Positionierung und Abfederung schlupfgeregelter oder starrer Radsätze übernimmt, läßt sich eine sehr hohe Gewichtsreduzierung erreichen. Außerdem werden die Radaufstandskraftvariationen verringert, was zu einer geringeren Beanspruchung des Oberbaus der schnell fahrenden Schienenfahrzeuge führt.

## Patentansprüche

1. Drehgestell für ein Schienenfahrzeug, mit einem H-förmigen Drehgestellrahmen (1), dessen Querträgerabschnitt (2) den Fahrzeugrahmen trägt, und einer Primärfederung für die mit ihren Achsen an den Enden der Arme des Drehgestellrahmens gelagerten Radsätze, dadurch gekennzeichnet, daß der Drehgestellrahmen (1) einschließlich der Primärfederung aus im Bereich des Querträgerabschnitts (2) relativ starr, im Bereich der von diesem ausgehenden Arme (3) elastisch als federnde Primäraufhängung wirkend ausgebildetem Faserverbundwerkstoff besteht.

2. Drehgestell nach Anspruch 1, dadurch gekennzeichnet, daß die Querschnittsfläche der Arme (3) von ihren Enden zum Querträgerabschnitt (2) hin zunimmt.

3. Drehgestell nach Anspruch 1 oder 2, dadurch gekennzeichnet, daß die Arme (3) des Drehgestellrahmens (1) zu ihren Enden hin vom Fahrzeugrahmen (14) weg nach unten gebogen sind.

4. Drehgestell nach Anspruch 1 oder 2, dadurch gekennzeichnet, daß die Radsatzachsen (4) auf der der Schiene (12) zugewandten Seite der Arme (3) des Drehgestellrahmens (1) liegen.

5. Drehgestell nach einem der vorhergehenden Ansprüche, gekennzeichnet durch zwischen den Radsatzachsen (4) und dem Fahrzeugrahmen (14) angeordnete, über eine Steuerung (10) einstellbare Vorlastelemente (9).

6. Drehgestell nach einem der vorhergehenden Ansprüche, dadurch gekennzeichnet, daß die Radsatzachsen (4) an den Armen (3) des Drehgestellrahmens (1) über Elastomerelemente (13) abgestützt sind.

## Claims

1. A bogie for a rail vehicle, comprising an H-shaped bogie frame (1), the cross member portion (2) of which carries the vehicle frame, and a primary suspension for the wheel sets mounted with their axles at the ends of the arms of the bogie frame, characterised in that the bogie frame (1) including the primary suspension consists of fibre composite material designed relatively rigidly in the region of the cross member portion (2) and acting, in the region of the arms (3) emanating from this, elastically as a resilient primary suspension.

2. A bogie according to claim 1, characterised in that the cross-sectional area of the arms (3) increases from their ends towards the cross member portion (2).

3. A bogie according to claim 1 or 2, characterised in that the arms (3) of the bogie frame (1) are bent downwardly towards their ends away from the vehicle frame (14).

4. A bogie according to claim 1 or 2, characterised in that the wheel set axles (4) lie on the side, turned to the rail (12), of the arms (3) of the bogie frame (1).

5. A bogie according to one of the preceding claims, characterised by preliminary loading elements (9) which are arranged between the wheel set axles (4) and the vehicle frame (14) and which are adjustable by way of a control (10).

6. A bogie according to one of the preceding claims, characterised in that the wheel set axles (4) are supported on the arms (3) of the bogie frame (1) by way of elastomeric elements (13).

## Revendications

1. Bogie pour un véhicule sur rail, comprenant un châssis de bogie (1) en forme de H dont la traverse (2) porte le châssis du véhicule, et une suspension primaire pour les paires de roues montées par leurs essieux sur les extrémités des bras du châssis de bogie, caractérisé par fait que le châssis de bogie (1) y compris 1a suspension primaire est réalisé en matériau composite fibreux relativement rigide dans la zone de la traverse (2) et souple et agissant en tant que suspension primaire élastique dans la zone des bras (3) partant de celle-ci.

2. Bogie selon la revendication 1, caractérisé par le fait que la surface de la section transversale des bras (3) va en augmentant de ses extrémités jusqu'à la traverse (2).

3. Bogie selon la revendication 1 ou 2, caractérisé par le fait que les bras (3) du châssis de bogie (1) à leurs extrémités se courbent vers le bas à mesure qu'ils s'écartent du châssis (14) du véhicule.

4. Bogie selon la revendication 1 ou 2, caractérisé par le fait que les essieux des paires de roues sont placés sur celui des côtés des bras (3) du châssis de bogie (1) wui est tourné vers le rail (12).

5. Bogie selon l'une des revendications précédentes caractérisé par des éléments de précharge (9) disposés entre les essieux (4) des paires de roues et le châssis (14) du véhicule et réglables au moyen d'une commande (10).

6. Bogie selon l'une des revendications précédentes caractérisé par le fait que les essieux (4) des paires de roues prennent appui sur les bras (3) du châssis de bogie (1) par l'intermédiaire d'éléments (13) en élastomère.

# Fig. 1

Fig. 2

Fig. 3

Fig. 4

Fig. 5